# EUROPÄISCHE PATENTANMELDUNG

(11) **EP 4 672 721 A1**
(43) Veröffentlichungstag der Anmeldung: **31.12.2025**
(21) Anmeldenummer: 24185368.8
(22) Anmeldetag: 28.06.2024
(51) Int. Cl.: H04L 67/306, H04L 51/046, H04L 51/222, H04L 51/52, H04L 67/55, H04W 4/80

(54) **VERFAHREN UND SYSTEM ZUM TEILEN DYNAMISCHER INTERNETINHALTE IN EINER LOKALEN UMGEBUNG**

(71) Anmelder: Deutsche Telekom AG, 53113 Bonn (DE)
(72) Erfinder: KÖPPEL, Simon, 68259 Mannheim (DE)
(74) Vertreter: Maucher Jenkins Patent- und Rechtsanwälte

(57) **Zusammenfassung**

Die Erfindung betrifft eine Lösung zum Teilen dynamischer Internetinhalte in einer lokalen Umgebung, mithilfe derer Nutzer andere Nutzer an einer durch sie mittels eines vorzugsweise mobilen Endgeräts erfolgenden Nutzung veränderlicher, über Plattformen im Internet angebotener Inhalte teilhaben lassen können. Mindestens ein Verbreiter dynamischer Internetinhalte, nämlich ein Nutzer eines eine Clientanwendung ausführenden Endgeräts, sendet veranlasst durch diese Clientanwendung wiederholt automatisiert eine Angebotsnachricht aus, mit der er anderen, sich im Empfangsbereich einer Funktechnik kurzer Reichweite befindenden Nutzern eines mobilen Endgeräts anbietet, an von ihm genutzten Internetinhalten teilzuhaben. Ein Nutzer eines ebenfalls die vorgenannte Funktechnik unterstützenden sowie dieselbe Clientanwendung ausführenden mobilen Endgeräts, welches die Angebotsnachricht eines Verbreiters empfängt und diese an einem Display visualisiert, tritt der Nutzung von ihm in der visualisierten Angebotsnachricht ausgewählter Internetinhalte als Teilhabender bei, indem durch die von seinem mobilen Endgerät verarbeitete Clientanwendung automatisiert eine Internetverbindung aufgebaut sowie eine jeweilige, zur Nutzung eines ausgewählten Internetinhalts erforderliche App oder Browseranwendung gestartet wird.

## Beschreibung

Die Erfindung betrifft eine Lösung zum Teilen dynamischer Internetinhalte in einer lokalen Umgebung. Sie bezieht sich hierbei insbesondere auf ein Verfahren, mithilfe dessen Nutzer andere Nutzer an einer durch sie mittels eines vorzugsweise mobilen Endgeräts erfolgenden Nutzung veränderlicher, über Plattformen im Internet angebotener Inhalte (dynamischer Internetinhalte) teilhaben lassen können. Gegenstand der Erfindung ist außerdem ein zur Durchführung dieses Verfahrens ausgebildetes System.

Mobile Endgeräte, welche der Kommunikation und dem Datenaustausch, einschließlich einer Nutzung über das Internet bereitgestellter Inhalte dienen, sind über die für den Aufbau entsprechender Verbindungen erforderlichen technischen Komponenten hinaus häufig mit Baugruppen und Einheiten für einen Datenaustausch unter Nutzung von Funktechniken kürzerer Reichweite ausgestattet.

So verfügen derartige Endgeräte zumeist über Sende- und Empfangseinheiten. für den Aufbau von Verbindungen nach dem Bluetooth-Standard. Mittels der Bluetooth-Technologie ist es ihnen beispielsweise möglich, sich mit anderen in ihrer Nähe befindenden Geräten und Einrichtungen zu koppeln. Man denke hierbei insbesondere an die Möglichkeit der Kopplung eines zur Kategorie der mobilen Endgeräte gehörenden Smartphones mit dem Infotainmentsystem eines modernen Kraftfahrzeugs. Die Reichweite entsprechender Bluetooth-Verbindungen beträgt typischerweise etwa 10 m bis 20 m. Nahezu alle Geräte dieser Art verfügen außerdem über Sende- und Empfangseinrichtungen zur Einbeziehung in ein WLAN, wobei die Reichweite dafür aufgebauter Verbindungen etwas größer ist und bis ca. 100 m betragen kann.

Darüber hinaus sind manche mobilen Endgeräte mit Einheiten für die sogenannte Nahfeldkommunikation (NFC = Near Field Communication) ausgestattet, mit deren Hilfe beispielsweise Zahlungsvorgänge unter Nutzung des betreffenden mobilen Endgeräts abgewickelt werden können. Die Reichweite hierfür genutzter, an dieser Stelle nur vervollständigend genannter Funkverbindungen beträgt nur wenige Zentimeter. Die NFC ist daher im Zusammenhang mit der hier beschriebenen Erfindung nach derzeitigem Stand eher nicht relevant.

Bei aktiviertem Bluetooth ist es beispielsweise Nutzern, welche sich zueinander in einer der vorstehend angegebenen Reichweite entsprechenden Entfernung befinden, möglich, mithilfe der von ihnen genutzten mobilen Endgeräte Daten untereinander auszutauschen respektive miteinander zu teilen. Jedoch beschränkt sich ein in dieser Weise erfolgender Datenaustausch typischerweise auf den Austausch von auf den miteinander in Verbindungen stehenden Endgeräten selbst gehaltenen Basisinformationen mit einem in der Regel geringen Umfang. Hierbei kann es sich beispielsweise um Kontaktdaten und dergleichen handeln. Abgesehen von einem üblicherweise durch die Nutzer unmittelbar selbst veranlassten Austausch derartiger Daten ist aber festzustellen, dass die meisten sich gemeinsam in einer lokalen Umgebung befindenden und hierbei ein mobiles Endgerät verwendenden Nutzer auch im Falle der Aktivierung einer Bluetooth-Nutzung bei dem betreffenden Endgerät aus kommunikationstechnischer Sicht meist für sich allein sind.

Ausnahmen bilden allenfalls spezielle Apps (mit den mobilen Endgeräten ausgeführte Miniprogrammanwendungen), wie beispielsweise Dating-Apps, welche es ihren Nutzern ermöglichen, bewusst mit anderen, sich innerhalb ihrer Bluetooth-Reichweite befindenden Nutzern in eine kommunikative Verbindungen zu treten. Aber auch hierbei werden lediglich Informationen mit einem stark beschränkten Umfang, wie beispielsweise Daten zu einem in einer entsprechenden App hinterlegten und auf dem mobilen Endgerät gespeicherten Profil, ausgetauscht. Es ist hierbei nicht vorgesehen, dass die Nutzer umfangreichere und sich dynamisch ändernde Internetinhalte untereinander teilen.

Aus der US 20140038526 A1 ist eine Lösung bekannt geworden, mittels welcher sich Nutzer mobiler Endgeräte beispielsweise auch unter Einsatz der Bluetooth-Funktechnik miteinander vernetzen können. Die solchermaßen in einem Mesh-Netzwerk miteinander vernetzten Nutzer tauschen hierbei Daten und Informationen ebenfalls unmittelbar direkt untereinander aus.

Aufgabe der Erfindung ist es, eine Lösung bereitzustellen, welche es Nutzern mobiler Endgeräte ermöglicht, in einer lokalen Umgebung, also in einem begrenzten Umfeld, dynamische Internetinhalte miteinander zu teilen.

Die Aufgabe wird durch ein Verfahren mit den Merkmalen des Patentanspruchs 1 gelöst. Ein die Aufgabe lösendes und zur Durchführung des Verfahrens geeignetes System wird durch den sich auf ein solches beziehenden unabhängigen Sachanspruch charakterisiert. Vorteilhafte Aus- und Weiterbildungen des Verfahrens sind durch die sich auf den Patenanspruch 1 unmittelbar oder mittelbar rückbeziehenden Unteransprüche gegeben.

Gemäß dem zur Lösung der Aufgabe vorgeschlagenen Verfahren zum Teilen dynamischer Inhalte in einer lokalen Umgebung können Nutzer dynamischer Inhalte andere Nutzer an einer durch Sie mittels eines (vorzugsweise mobilen) Endgeräts erfolgenden Nutzung dieser Inhalte teilhaben lassen. Diejenigen Nutzer, welche es anderen Nutzern ermöglichen, an einer durch sie erfolgenden Nutzung dynamischer Internetinhalte teilzuhaben, sollen im Weiteren, nämlich im Kontext dieser Erfindungsbeschreibung und der Patentansprüche, als Verbreiter (Verbreiter dynamischer Internetinhalte) bezeichnet werden. Die ein entsprechendes Angebot eines Verbreiters wahrnehmenden Nutzer werden hingegen in diesem Kontext als Teilhabende bezeichnet. Jedoch sei bereits an dieser Stelle darauf hingewiesen, dass die vorgeschlagene Lösung die Möglichkeit umfasst, dass einzelne oder gar alle Nutzer des Verfahrens mithilfe des von ihnen jeweils verwendeten Endgeräts sowohl als Verbreiter als auch als Teilhabende agieren.

Die gemeinsame "Klammer", welche Nutzer als Verbreiter und/oder Teilhabende gewissermaßen innerhalb der zuvor und auch in der Aufgabe angesprochenen lokalen Umgebung zu einer Community zusammenführt, ist eine Software-Anwendung, nämlich eine Clientanwendung, welche durch die Endgeräte aller zu dieser Community gehörenden Nutzer ausgeführt wird. Soweit im Weiteren und in den Patentansprüchen von einer Clientanwendung gesprochen wird, handelt es sich hierbei stets um diese zuvor angesprochene, durch die Endgeräte der Nutzer ausgeführte spezielle Software-Anwendung, auf welche nachfolgend noch näher eingegangen werden soll.

An dieser Stelle soll, der weiteren Erfindungsbeschreibung vorausgeschickt, beispielhaft noch kurz auf die Art der im Zusammenhang mit der Erfindung in Rede stehenden dynamischen Internetinhalte eingegangen werden. Demnach handelt es sich hierbei beispielsweise um Inhalte auf Social Media Plattformen oder auch um Inhalte, welche durch Anbieter von Audio- und/oder Videostreamingdiensten, wie zum Beispiel YouTube, Netflix oder Spotify, vermittelt werden. Bei den vorstehend genannten Bezeichnungen für Streamingangebote handelt es sich um Marken der jeweiligen Dienstanbieter.

Entsprechend dem vorgeschlagenen Verfahren wird durch mindestens einen Verbreiter, nämlich einen Nutzer eines Endgeräts, anderen Teilnehmern die Teilhabe an einer durch den (mindestens einen) Verbreiter - im Weiteren wird vereinfachend von dem Verbreiter gesprochen - mittels seines Endgeräts unter einem Account bei einer Plattform zur Vermittlung von Inhalten im Internet erfolgenden Nutzung dynamischer Inhalte angeboten. In den weiteren Erläuterungen wird, da insoweit bevorzugt, stets von einem mobilen Endgerät des Verbreiters gesprochen, auch wenn diese im Einzelfalle ein stationär betriebenes Endgerät ist, welches aber die später noch angesprochenen, für mobile Endgeräte typischen Funktechniken unterstützt.

Dies geschieht, indem durch eine von dem mobilen Endgerät des Verbreiters verarbeitete Clientanwendung wiederholt automatisiert Angebotsnachrichten ausgesendet werden, nämlich wiederholt (beispielsweise zyklisch) dieselbe Angebotsnachricht. Mit dem Aussenden dieser Angebotsnachricht wird anderen, sich im Empfangsbereich einer durch das mobile Endgerät des Verbreiters unterstützten Funktechnik kurzer Reichweite befindenden Nutzern die Teilhabe an der durch den Verbreiter erfolgenden Nutzung dynamischer Inhalte angeboten. Die vorgenannte Funktechnik respektive deren Reichweite definiert hierbei die schon mehrfach angesprochene lokale Umgebung, innerhalb welcher die Nutzer - Verbreiter und Teilhabende - entsprechende dynamische Inhalte teilen können. Vorzugsweise wird die Angebotsnachricht durch das mobile Endgerät des Verbreiters auch ausgesendet, wenn die dies veranlassende Clientanwendung auf dem betreffenden Endgerät nur im Hintergrund läuft, es sei denn der Nutzer (Verbreiter) hat das Aussenden dieser Nachricht (zumindest vorübergehend) in der Clientanwendung deaktiviert. Die Art/Kategorie der von ihm durch das Aussenden der Angebotsnachricht zur Teilhabe angebotenen Internetinhalte, wie von ihm über ein entsprechendes Portal veröffentlichte Social Media Inhalte oder von ihm genutzte Streamingdienste, hinterlegt der Verbreiter in einem Profil, welches in einem Einstellungs- respektive Konfigurationsmodus der Clientanwendung angelegt wird und veränderbar (editierbar) ist. Das Profil speichert der als Verbreiter agierende Nutzer unter einem Profilnamen. Da es sich hierbei typischerweise um einen Nicknamen handeln wird und dieser Nutzer, mit Ausnahme der von ihm zur Teilhabe angebotenen Internetinhalte zu seiner Person keine (für potenziell teilhabende Nutzer sichtbaren) Daten angeben muss, kann er hinsichtlich seiner Identität anonym bleiben.

Sofern mindestens ein Nutzer eines ebenfalls die angesprochene Funktechnik kurzer Reichweite unterstützenden sowie dieselbe Clientanwendung ausführenden mobilen Endgeräts die Angebotsnachricht des Verbreiters empfängt, kann er zum Teilhaber durch den Verbreiter genutzter dynamischer Internetinhalte werden. Hierzu wird die von dem mindestens einen Verbreiter respektive von dessen mobilem Endgerät ausgesendete Angebotsnachricht durch das mobile Endgerät des Empfängers für diesen an mindestens einem von gegebenenfalls mehreren Displays seines Endgeräts visualisiert. Hierbei wird diesem Nutzer respektive dem Empfänger für jeden der zur Teilhabe angebotenen Internetinhalte jeweils mindestens ein Link angezeigt.

Der Nutzer des die Angebotsnachricht des Verbreiters visualisierenden mobilen Endgeräts hat dann die Möglichkeit, unter den ihm angezeigten durch den Verbreiter mittels der Angebotsnachricht zur Teilhabe angebotenen dynamischen Internetinhalten die ihn interessierenden durch Anklicken des jeweiligen Links auszuwählen. Durch die von ihm getroffene Auswahl wird der Nutzer dann zum Teilhabenden, indem durch die von seinem mobilen Endgerät verarbeitete Clientanwendung automatisiert eine Internetverbindung aufgebaut sowie eine jeweilige zur Nutzung der ausgewählten Internetinhalte erforderliche App oder Browseranwendung der diese jeweiligen Inhalte vermittelnden Plattform gestartet wird.

Typischerweise wird der Teilhabende hierbei nur einen Internetinhalt durch Anklicken des entsprechenden Links zur Teilhabe auswählen und diesen dann unmittelbar (teilhabend) nutzen. Im Hinblick darauf, dass es inzwischen auch schon multitaskingfähige mobile Endgeräte gibt, die mehrere Anwendungen gleichzeitig parallel in unterschiedlichen Fenstern laufen lassen können, ist aber selbstverständlich von der hier beschriebenen Lösung auch die Möglichkeit umfasst, dass der Teilhabende gleich mehrere Internetinhalte auswählt und diese gewissermaßen gleichzeitig in mehreren ihm durch sein Endgerät zur Ansicht gebrachten Fenstern nutzt.

Soweit im Kontext der Erfindungsbeschreibung auch im Zusammenhang mit den vorstehend genannten Streamingdienstanbietern von Inhaltevermittlern respektive davon gesprochen wird, dass diese Internetinhalte vermitteln, schließt dies mit ein, dass diese Vermittler die jeweiligen Inhalte auch selbst produzieren und/oder anbieten. Aber gerade auch im Falle von YouTube handelt es sich häufiger tatsächlich nur um die Vermittlung derartiger Inhalte. Hierbei ist es beispielsweise auch Privatpersonen möglich, Videoinhalte selbst zu erstellen und diese unter Nutzung eines bei dem Dienstanbieter respektive Vermittler von Inhalten (YouTube) eingerichteten Accounts zu verbreiten.

Aus der Sicht eines Verbreiters umfasst die Nutzung dynamischer Internetinhalte jedenfalls auch die Möglichkeit, solche Inhalte selbst zu erstellen respektive sie zu produzieren und diese über die Internetplattform eines Inhaltevermittlers zu veröffentlichen. Mittels des vorgeschlagenen Verfahrens ist es dem Verbreiter dabei möglich andere Nutzern auf die von ihm erstellten Inhalte aufmerksam zu machen und ihnen unmittelbar, nämlich mithilfe der von seinem mobilen Endgerät und von den mobilen Endgeräten der anderen Nutzer ausgeführten Clientanwendung die Teilhabe an den selbst erstellten dynamischen Internetinhalten anzubieten.

Das Angebot zur Teilhabe an durch den Verbreiter genutzten Internetinhalten beschränkt sich dabei bei dem hier zugrundeliegenden Verständnis nicht zwingend auf Inhalte, die durch den Verbreiter in dem Moment, in welchem sich ein anderer, die Angebotsnachricht des Verbreiters empfangender Nutzer zur Teilhabe entscheidet, auch augenblicklich aktiv genutzt werden. Dies meint zum Beispiel, dass ein Verbreiter die Teilhabe an einem von ihm genutzten Musikstreamingdienst durch die wiederholte Aussendung entsprechender Angebotsnachrichten anderen Nutzern auch dann anbieten kann, wenn er augenblicklich selbst keinen Musiktitel dieses Dienstes hört und diesen dazu als Stream bezieht.

Vergleichbares ist im Zusammenhang mit der Nutzung von Social Media Portalen respektive Plattformen sogar durchaus typisch. Das heißt, ein Nutzer als Verbreiter kann zum Beispiel auf einer entsprechenden Social Media Plattform unter Nutzung eines eigenen Accounts im Internet "unterwegs" sein und dort von Zeit zu Zeit selbst Inhalte einstellen respektive diese posten. Das bedeutet aber selbstverständlich nicht, dass er solche Inhalte unentwegt postet. Dennoch können Nutzer, denen der Verbreiter die Teilhabe an von ihm genutzten dynamischen Inhalten, wie die hier in Rede stehenden Social Media Inhalte, anbietet, den unter dem Account des Verbreiters im Internet gehosteten Inhalten beitreten, das heißt, an diesen teilhaben respektive sie auf ihrem eigenen mobilen Endgerät wiedergeben. Sie treten hierbei also nicht unmittelbar einem konkreten, augenblicklich verwendeten Internetinhalt bei, sondern einem Profil des Verbreiters unter welchem dieser selbst erzeugte Inhalte ins Internet stellt oder gelegentlich - nur eben nicht augenblicklich - Internetinhalte nutzt, die über ein Portal eines Inhaltevermittler bereitgestellt werden.

Bei der praktischen Umsetzung und Nutzung des Verfahrens wird es typischerweise so sein, dass Nutzer mobiler Endgeräte, nämlich an der Nutzung dynamischer Internetinhalte potenziell Teilhabende, nicht nur Angebotsnachrichten eines Verbreiters empfangen. Soweit daher das mobile Endgerät eines Nutzers Angebotsnachrichten der mobilen Endgeräte mehrerer Verbreiter empfängt, wird durch dieses mobile Endgerät an seinem mindestens einen Display eine Liste mit den Profilnamen der mehreren, die Angebotsnachrichten aussendenden Verbreiter anzeigt. Aus dieser Liste kann der die Angebotsnachrichten empfangende Nutzer respektive der potenziell Teilhabende denjenigen Verbreiter auswählen, welchem er gewissermaßen hinsichtlich der Nutzung dynamischer Internetinhalte folgen will. Ihm wird dann durch die von seinem mobilen Endgerät verarbeitete Clientanwendung die bereits angesprochene Auswahl der von diesem Verbreiter zur Teilhabe angebotenen Internetinhalte visualisiert.

Bei der Auswahl eines Verbreiters aus einer Liste mit mehreren Angebotsnachrichten aussendenden Verbreitern kann sich der die Angebotsnachrichten der in der Liste aufgeführten Verbreiter empfangende Nutzer beispielsweise davon leiten lassen, dass er das Angebot eines bestimmten (ihm in der Regel nur mit seinem Nicknamen) bekannten Verbreiters vielleicht auch schon in der Vergangenheit genutzt hat. Oder aber er wählt möglicherweise einen ganz bestimmten kommerziell agierenden Verbreiter, wie den Betreiber eines Geschäfts respektive eines Stores aus, der zum Beispiel über seinen YouTube-Kanal Werbung zu seinen Produkten verbreitet.

Wie insbesondere die letzten Ausführungen zeigen, bietet die hier vorgestellte Lösung auch viel Potenzial für eine kommerzielle Nutzung. So können beispielsweise die Inhaber von Stores respektive Geschäften als Verbreiter agieren und hierbei Teilhabende als potenzielle Kunden mit Werbung für ihre Produkte und/oder Dienstleistungen ansprechen. Solche Gewerbetreibenden respektive Werbung aussendende Verbreiter werden zur Nutzung der Clientanwendung und Aussendung der Angebotsnachrichten möglicherweise ein in ihrem Geschäft betriebenes stationäres Endgerät benutzen, welches aber im Zusammenhang mit der hier beschriebenen Lösung als ein den mobilen Endgeräten anderer Verbreiter und potenzieller Teilhabender gleichgestelltes Endgerät betrachtet werden soll.

Insbesondere in dem zuletzt angesprochenen Kontext kann das Verfahren vorteilhaft so weitergebildet sein, dass potenziellen Nutzern zur Teilhabe angebotener Inhalte, welche Angebotsnachrichten mehrerer Verbreiter mittels ihrer mobilen Endgeräte empfangen, durch einen Bereitsteller der Clientanwendung zur Nutzung des Verfahrens eine Liste angezeigt wird, in welcher die sich in der Reichweite der zur Versendung der Angebotsnachrichten genutzten Funktechnik befindenden Verbreiter hinsichtlich ihrer Anzeigereihenfolge entsprechend einer Priorisierung des Bereitstellers gelistet sind. So können beispielsweise Verbreiter (wie zum Beispiel Werbung betreibende Unternehmen) bei dem vorgenannten Bereitsteller über einen gegebenenfalls auch gestaffelt bepreisten Account verfügen. Hierdurch erhalten sie innerhalb der Liste von Verbreitern eine entsprechende Priorisierung, bis dahingehend, dass sie solange sie sich bezogen auf einen potenziellen Teilhabenden in der Reichweite von dessen die erste (zur Verbreitung von Angebotsnachrichten genutzten) Funktechnik unterstützenden mobilen Endgerät befinden, an einer oberen Position der Liste "angepinnt" bleiben. Selbstverständlich fallen auch diese Verbreiter aus der einem potenziellen Teilhabenden angezeigten Liste heraus, sobald sie sich nicht mehr innerhalb der Reichweite der ersten Funktechnik befinden.

Während im Zusammenhang mit dem hier beschriebenen Verfahren seitens eines jeweiligen Verbreiters stets vom Vorhandensein eines Accounts respektive entsprechender Credentials bei der die von ihm zur Teilhabe angebotenen Internetinhalte vermittelnden Plattform ausgegangen wird, muss dies für einen solche Angebote annehmenden Nutzer als Teilhabender nicht zwingend der Fall sein. Beispielsweise ist es Internetnutzern möglich, durch andere Nutzer, zum Beispiel Verbreiter, über eine Plattform, wie YouTube, auf Server im Internet hochgeladene Videos auch ohne einen eigenen Account anzusehen.

Allerdings gibt es selbstverständlich auch Internetplattformen, wie beispielsweise Streamingplattformen kommerzieller Inhalteanbieter, deren Nutzung stets an die Verwendung eines Accounts gebunden ist. In diesen Fällen ist es Nutzern, welche an durch einen Verbreiter zur Teilhabe angebotenen Internetinhalten partizipieren möchten, nur dann möglich, den betreffenden Inhalten beizutreten respektive an diesen teilzuhaben, wenn sie selbst über einen Account bei dem jeweiligen Inhaltevermittler verfügen. Soweit es sich hierbei um Internetinhalte handelt, welche mittels einer durch ein mobiles Endgerät verarbeiteten App nutzbar sind, kann dem gemäß dem hier vorgestellten Verfahren dadurch entsprochen werden, dass einem die Angebotsnachricht eines Verbreiters empfangenden Nutzer durch die von seinem mobilen Endgerät verarbeitete Clientanwendung nur Internetinhalte zur Teilhabe angeboten (visualisiert) werden, bei deren Inhaltevermittlern sie über einen Account respektive über entsprechende Credentials verfügen oder welche ohne einen solchen Account nutzbar sind.

Wie bereits weiter oben angesprochen, muss es sich bei den von einem Verbreiter zur Teilhabe angebotenen dynamischen Internetinhalten nicht zwingend um solche Inhalte handeln, die durch den Verbreiter im Moment der durch die von seinem mobilen Endgerät verarbeitete Clientanwendung ausgesendeten Nachricht (Angebotsnachricht) augenblicklich auch selbst genutzt werden. Gleichwohl ist es aber Verbreitern selbstverständlich auch möglich, augenblicklich von ihnen selbst genutzte dynamische Internetinhalte anderen Nutzern zur Teilhabe anzubieten. Aus Sicht des ein entsprechendes Angebot annehmenden Nutzers, also eines Teilhabenden, ist es hierbei beispielsweise möglich, unmittelbar einem durch den Verbreiter bei einem Musikstreamingdienst angehörten Musiktitel beizutreten, wobei dieser Musiktitel durch das mobile Endgerät des in dieser Weise an der Nutzung Teilhabenden, unmittelbar ab dem Zeitpunkt seines Beitritts zu dem vom Verbreiter zur Teilhabe angebotenen Internetinhalt wiedergegeben wird. Der Teilhabende kann hierbei gegebenenfalls - durch Auswahl einer entsprechenden durch die Clientanwendung angebotenen Option - auch einer durch den Verbreiter bei dem Streamingdienst gestarteten Session beitreten. Im letztgenannten Fall partizipiert der Teilhabende (solange er dies möchte) auch an gegebenenfalls nachfolgenden durch den Verbreiter angehörten Musiktiteln und vollzieht auch einen eventuellen vorzeitigen Wechsel auf einen anderen Musiktitel mit.

Als Funktechnik kurzer Reichweite, welche durch das mobile Endgerät des mindestens einen Verbreiters zur Aussendung der Angebotsnachricht verwendet wird und somit gewissermaßen die lokale Umgebung definiert, innerhalb welcher dynamische Internetinhalte durch den Verbreiter zur Teilhabe angeboten werden, kommt vorzugsweise Bluetooth, insbesondere Bluetooth ULE (Bluetooth mit einem niedrigen Energieverbrauch mit ULE = Ultra Low Energy) zum Einsatz.

Selbstverständlich ist aber auch die Nutzung anderer gegenwärtig verwendeter Funktechniken, wie WLAN, sowie letztlich nahezu aller, gegebenenfalls noch zu entwickelnden Funktechniken denkbar. Bei Verwendung anderer, eine höhere Reichweite als Bluetooth aufweisender Funktechniken kann das Verfahren vorteilhaft auch in der Weise implementiert werden, dass ein potenzieller Teilhabender, aufgrund entsprechender von ihm in der Clientanwendung vorgenommener Einstellungen, mittels des von ihm verwendeten mobilen Endgeräts nur Angebotsnachrichten empfängt, welche via Bluetooth ausgesendet werden. Hierdurch ist es für den betreffenden Nutzer, also den potenziellen Teilhabenden, möglich, die lokale Umgebung respektive den Umkreis festzulegen, in der/dem er entsprechende Angebote zum Teilen dynamischer Internetinhalte empfangen möchte. Eine entsprechende Festlegung kann, wie gesagt, in den Einstellungsoptionen der Clientanwendung getroffen werden.

Entsprechend einer speziellen denkbaren Ausgestaltung des erfindungsgemäßen Verfahrens kann es im Zusammenhang mit einer bestimmten, hierfür als Voraussetzung anzusehenden Konfiguration auch möglich sein, dass für das Aussenden von Angebotsnachrichten durch das mobile Endgerät eines Verbreiters eine Broadcasttechnik unter Nutzung eines Mobilfunkstandards verwendet wird. Die Voraussetzung hierfür ist, dass durch einen Mobilfunkprovider die im Rahmen des Verfahrens erforderliche, auf den Endgeräten der Nutzer des Verfahrens zu installierende Clientanwendung und/oder die zu ihrer Nutzung erforderliche Netzinfrastruktur bereitgestellt wird. In dieser Konstellation ist es dem betreffenden Mobilfunkprovider dabei möglich, die Reichweite der als Broadcast ausgesendeten Angebotsnachricht eines Verbreiters auf eine einzelne Funkzelle zu begrenzen, so dass in diesem Kontext ebenfalls von einer Funktechnik kurzer Reichweite respektive der Festlegung einer (begrenzten) lokalen Umgebung gesprochen werden kann. Vorzugsweise werden von diesem Provider, mithilfe entsprechender Einrichtungen seiner Infrastruktur, auch Profildaten der das Verfahren verwendenden Nutzer gehostet.

Die vorgestellte Lösung schafft gewissermaßen eine dynamische und erweiterte Plattform für das Teilung von Daten, nämlich von sich verändernden Internetinhalten, in lokalen Umgebungen. Durch die dabei vorzugsweise erfolgende Nutzung von Bluetooth ULE für lokale Verbindungen zur Aussendung und zum Empfang dazu dienender Angebotsnachrichten sowie für die Integration von Internetdaten ermöglicht diese Lösung in Form der dafür ausgeführten Clientanwendung ihren Nutzern, personalisierte und reichhaltige Informationen mit anderen Nutzern in ihrer unmittelbaren Umgebung zu teilen. Es wird insoweit eine nahtlose und sichere Möglichkeit geschaffen, lokale Events, Angebote und Empfehlungen zu teilen und zu entdecken, während gleichzeitig die Anonymität der Nutzer gewahrt bleiben kann. Durch die Lösung wird somit die lokale Vernetzung gestärkt und ein Mehrwert für Nutzer geschaffen, indem diesen eine effektive und innovative Plattform für die Kommunikation und den Austausch in lokalen Gemeinschaften zur Verfügung gestellt wird.

Die beschriebene Lösung geht insoweit über den aktuellen Stand hinaus, als sie eine umfassendere Plattform für die Datenteilung in der Umgebung schafft. Durch die Kombination von Bluetooth ULE für die lokale Übertragung und der Integration von Internetdaten ermöglicht die App eine dynamische Aktualisierung der Informationen. Der einmalige Link, der über Bluetooth mittels der Angebotsnachricht geteilt wird, führt zu einer Übersicht, die nicht nur Basisinformationen enthält, sondern auch Bilder und weiterführende Details über entsprechende Plattformen von Inhaltevermittlern aus dem Internet nachlädt.

Ihr Mehrwert besteht in der Möglichkeit, personalisierte und reichhaltige Inhalte mit anderen Nutzern in der lokalen Umgebung zu teilen. Dies eröffnet beispielsweise Anwendungsbereiche wie Event-Veranstaltungen, lokale Angebote und Empfehlungen. Die Funktion, Angebote zur Teilhabe an Internetinhalten in Form von in der Angebotsnachricht enthaltenen Links auch bei geschlossener respektive im Hintergrund laufender Clientanwendung zu senden/zu empfangen, sorgt für eine kontinuierliche Aktualisierung der Informationen. Zudem gewährleistet die Anonymität durch die mögliche Verwendung von Pseudonymen respektive Nicknamen, eine sichere Nutzung.

Nachfolgend soll anhand von Zeichnungen in der Art eines Ausführungsbeispiels nochmals auf einige Aspekte der vorgestellten Lösung eingegangen werden. Im Einzelnen zeigen:
- Fig. 1:: eine mögliche Bildschirmmaske zum Definieren eines Profils für einen als Verbreiter agierenden Nutzer,
- Fig. 2:: eine mögliche Bildschirmmaske, mittels welcher dem Nutzer eines mobilen Endgeräts eine empfangene Angebotsnachricht eines Verbreiters visualisiert wird,
- Fig. 3:: ein Beispiel für mögliche Beziehungen zwischen Nutzern des erfindungsgemäßen Verfahrens.

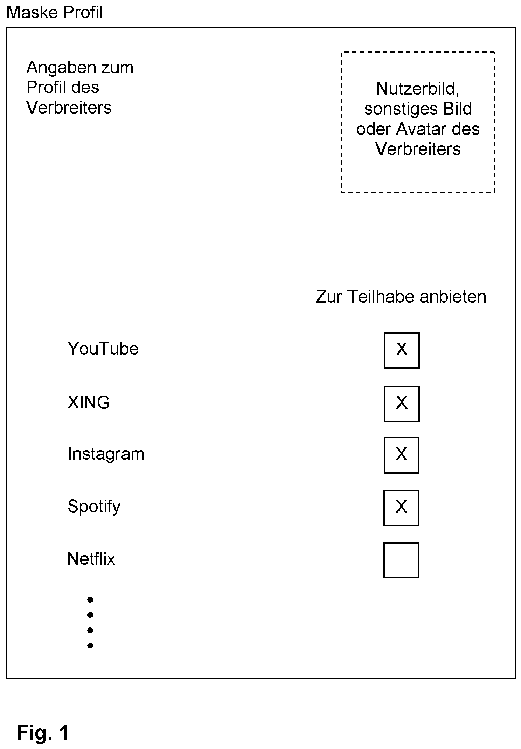

Die Fig. 1 zeigt beispielhaft und stark schematisiert die Darstellung einer Bildschirmmaske, der zur Durchführung des Verfahrens erforderlichen Clientanwendung. Ein Nutzer, welcher dynamische Internetinhalte als Verbreiter mit anderen Nutzern teilen möchte, legt hierfür mithilfe dieser Bildschirmmaske ein Nutzerprofil an. In einem Profil- oder Konfigurationsmodus kann der betreffende Nutzer dabei Angaben zu seiner Person machen, wobei die Angabe seines Namens oder eines Nicknamens vorzugsweise eine Mindestangabe darstellen sollte.

Ein Nutzer, der beabsichtigt, als Verbreiter dynamischer Internetinhalte zu agieren und hierfür mittels der gezeigten Bildschirmmaske ein Profil anlegt, kann diesem Profil, sofern er dies wünscht, außerdem ein Profilbild hinzufügen. Das heißt er kann in Zuordnung zu seinem Profil sein eigenes Bild, ein beliebiges anderes Bild oder das Bild eines Avatars hinterlegen. Die Profildaten eines jeweiligen Nutzers können im Rahmen einer denkbaren Minimalkonfiguration unmittelbar im mobilen Endgerät des potenziellen Verbreiters gespeichert werden. Vorzugsweise ist es jedoch vorgesehen, dass die vorgestellte Lösung durch einen auch die Clientanwendung zum Download zur Verfügung stellenden sowie deren Einsatz managenden Anbieter betreut wird und die Profildaten von als Verbreitern agierenden Nutzern in entsprechenden technischen Einrichtungen dieses Anbieters gespeichert werden. Durch Letzteres kann die Gefahr verringert werden, dass Nutzer missbräuchlich ständig unter anderen Profilen als Verbreiter dynamischer Internetinhalte auftreten. Die von einem jeweiligen Nutzer in seiner Eigenschaft als Verbreiter zum Profil gespeicherten Daten werden als Bestandteil der durch die Clientanwendung ausgesendeten Angebotsnachricht an deren Empfänger übermittelt.

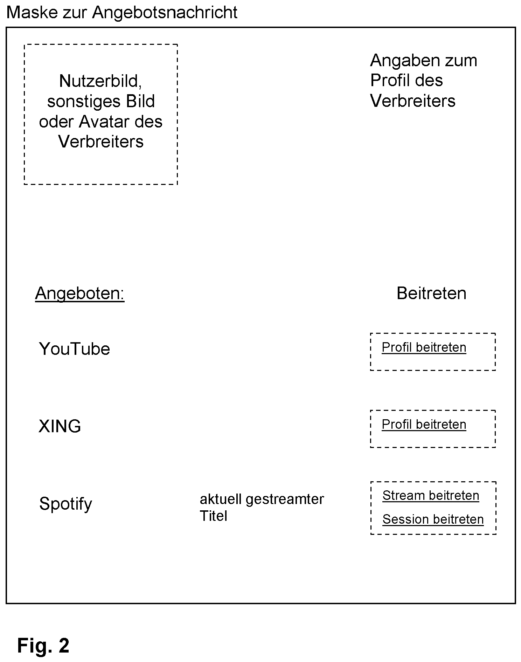

Die Fig. 2 zeigt, ebenfalls in einer stark vereinfachten schematischen Darstellung, ein Beispiel für eine Bildschirmmaske, mittels welcher die von einem mobilen Endgerät empfangene Angebotsnachricht eines Verbreiters für den Nutzer des diese empfangenden Endgeräts visualisiert wird, sobald er diesen Verbreiter aus einer Liste von gegebenenfalls mehreren Verbreitern auswählt. Über die Bildschirmmaske erhält der betreffende Nutzer Informationen zum Versender der Angebotsnachricht respektive zur Person eines jeweiligen Verbreiters. Diese Informationen können, sofern im Profil des Verbreiters hinterlegt, ein Bild, beispielsweise die Darstellung eines Avatars des Verbreiters, umfassen.

Ferner werden dem Empfänger der Angebotsnachricht, also dem potenziellen Teilhabenden, Informationen dazu vermittelt, welche dynamischen Internetinhalte durch den jeweiligen Verbreiter zur Teilhabe angeboten werden. Gemäß dem gezeigten Beispiel werden die betreffenden Internetinhalte in Form einer Liste dargestellt, in welcher für jeden der zur Teilhabe angebotenen Internetinhalte (Social Media Anwendungen oder Streaminganwendungen) ein Link visualisiert wird. Durch Aktivierung (Antippen/Anklicken) des entsprechenden Links kann der Nutzer des die Angebotsnachricht zur Ansicht bringenden mobilen Endgeräts, welches ebenfalls die Clientanwendung ausführt, den Internetinhalt auswählen, an dem er teilhaben möchte. Wählt er einen dieser Inhalte aus, wird durch sein mobiles Endgerät respektive durch die von diesem verarbeitete Clientanwendung eine Internetverbindung aufgebaut und automatisiert eine zur Nutzung des jeweiligen Inhalts erforderliche App oder Browseranwendung gestartet.

Der betreffende Nutzer wird somit zum Teilhabenden der auch durch den Verbreiter genutzten dynamischen Internetinhalte. Wie in der Abbildung beispielhaft gezeigt, kann ein Teilhabender dabei gegebenenfalls direkt auch in einen von dem Verbreiter augenblicklich genutzten Stream, beispielsweise eines Musikstreamingdienstes, "hineinspringen". Hingegen würde er zum Beispiel bei Aktivierung des links für YouTube gewissermaßen einem YouTube-Profil des Verbreiters beitreten, wodurch es ihm ermöglicht, wird unmittelbar zu Wiedergabe durch den Verbreiter produzierter und/oder in das Plattformangebot des Inhaltevermittlers (hier YouTube) eingestellter Inhalte zu gelangen. Aber auch im Zusammenhang mit dem Angebot zur Teilhabe an YouTube-Inhalten kann es, abweichend von der beispielhaften Darstellung der Fig. 2, einen weiteren Link in der Bildschirmmaske geben, welcher den unmittelbaren Beitritt zu einem aktuell laufenden Video gestattet. Dies ist letztlich eine Frage der Implementierung des Verfahrens und dessen, was die Inhaltevermittler und die von diesen verbreiteten Anwendungen (Apps und Browseranwendungen) zulassen.

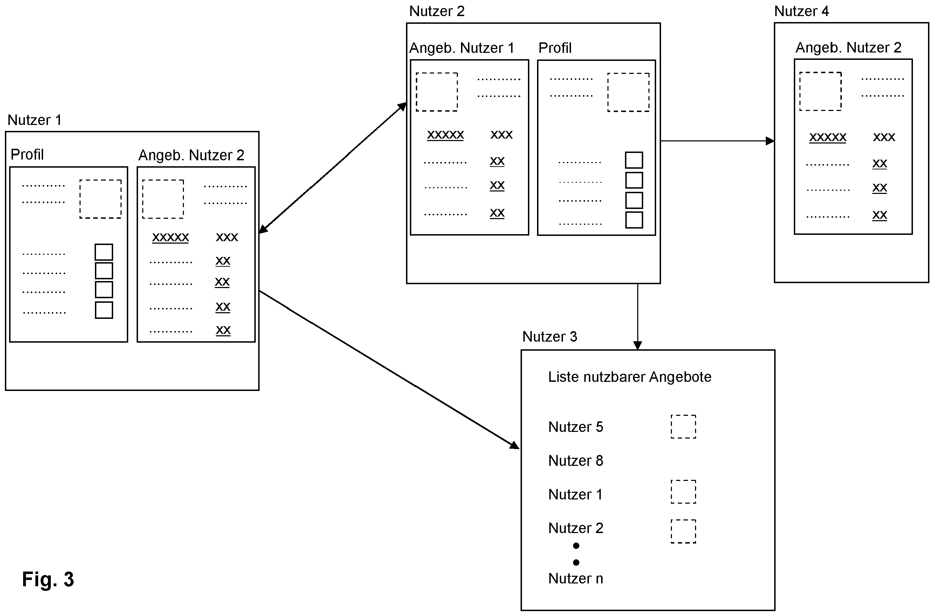

Die Fig. 3 zeigt ebenfalls in schematisierter Form mögliche Beziehungen zwischen mehreren Nutzern der vorgestellten Lösung. Bei den Nutzern 1 und 2 handelt es sich gemäß dem gezeigten Beispiel um Nutzer, welche sowohl als Verbreiter dynamischer Internetinhalte als auch als Teilhabende durch andere Nutzer zur Teilhabe angebotener Internetinhalte agieren. Dies ist hier dadurch symbolisiert, dass beiden Nutzern (Nutzer 1 und Nutzer 2) in einem Konfigurationsmodus eine Bildschirmmaske zur Hinterlegung eines Profils und in einem Standardbenutzungsmodus Bildschirmmasken zu jeweils durch ihr Endgerät empfangenen Angebotsnachrichten präsentiert werden.

Die Nutzer 3 und 4 hingegen sind gewissermaßen ausschließlich passive Nutzer, welche gegebenenfalls das Angebot zur Teilhabe an durch andere Nutzer hierfür angebotenen Internetinhalten annehmen, wobei ihnen Angebotsnachrichten dieser anderen Nutzer an ihrem Endgerät durch eine entsprechende Bildschirmmaske visualisiert werden, sobald sie diese aus einer zuvor zur Anzeige gebrachten Liste von Angebotsnachrichten versendenden Verbreitern auswählen. In dem dargestellten Beispiel wird dem Nutzer 4 lediglich die durch den Nutzer 2 wiederholt ausgesendete Angebotsnachricht präsentiert, weil der Nutzer 4 diesen Verbreiter ausgewählt hat oder er sich beispielsweise außerhalb der Reichweite der durch den Nutzer 1 ausgesendeten Angebotsnachrichten befindet.

Der Nutzer 3 hingegen empfängt, wie angedeutet, Angebotsnachrichten sowohl der Nutzer 1 und 2 als auch weiterer als Verbreiter agierender Nutzer. Daher wird ihm durch die von seinem mobilen Endgerät dennoch ausgeführte Clientanwendung eine Liste dieser Verbreiter angezeigt, aus welcher er, sofern er dies wünscht, einen Verbreiter auswählen kann, an dessen Nutzung dynamischer Internetinhalte er teilhaben möchte. In der Liste werden ihm die betreffenden Nutzer (Verbreiter) mit einem Profilnamen und gegebenenfalls mit einem von diesen hinterlegten Profilbild angezeigt. Der Nutzer 3 selbst respektive sein mobiles Endgerät sendet aber, wie bereits ausgeführt, keine Angebotsnachrichten aus.

Durch den Umstand, dass die Bildschirmmaske des Angebotsnachrichten des Nutzers 2 (= Verbreiter) empfangenden Nutzers 4 weniger Einträge umfasst als durch den Nutzer 2 zur Teilhabe freigegeben wurden, soll symbolisiert werden, dass dem Nutzer 4 gegebenenfalls einige Inhaltsrubriken nicht angezeigt werden, weil die Nutzung der betreffenden Inhalte an die Verwendung jeweils eines eigenen Accounts gebunden ist, über welchen dieser Nutzer (Teilhabende) nicht verfügt.

## Patentansprüche

1. Verfahren zum Teilen dynamischer Internetinhalte in einer lokalen Umgebung, gemäß welchem Nutzer andere Nutzer an einer durch sie mittels eines Endgeräts erfolgenden Nutzung derartiger Inhalte teilhaben lassen können, **dadurch gekennzeichnet, dass** mindestens ein Verbreiter dynamischer Internetinhalte, nämlich ein Nutzer eines eine Clientanwendung ausführenden Endgeräts, mit einer durch diese Clientanwendung wiederholt automatisiert ausgesendeten Angebotsnachricht anderen, sich im Empfangsbereich einer durch das Endgerät des mindestens einen Verbreiters unterstützten Funktechnik kurzer Reichweite befindenden Nutzern eines mobilen Endgeräts anbietet, an einer durch den mindestens einen Verbreiter mittels seines Endgeräts, unter einem Account bei einer Internetplattform eines Inhaltevermittlers erfolgenden Nutzung dynamischer Internetinhalte teilzuhaben und dass mindestens ein Nutzer eines ebenfalls die erste Funktechnik unterstützenden sowie dieselbe Clientanwendung ausführenden mobilen Endgeräts, welches die Angebotsnachricht eines Verbreiters empfängt und diese an seinem mindestens einen Display visualisiert, der Nutzung von ihm in der visualisierten Angebotsnachricht ausgewählter Internetinhalte als Teilhabender beitritt, indem durch die von seinem mobilen Endgerät verarbeitete Clientanwendung automatisiert eine Internetverbindung aufgebaut sowie eine jeweilige, zur Nutzung eines ausgewählten Internetinhalts erforderliche App oder Browseranwendung gestartet wird.

2. Verfahren nach Anspruch 1, **dadurch gekennzeichnet, dass** durch den mindestens einen Verbreiter in der Clientanwendung ein Profileintrag erstellt wird, in welchem er auswählt, an der Nutzung welcher von ihm mittels eines bei einer Internetplattform eines jeweiligen Inhaltevermittlers genutzter dynamischer Internetinhalte er andere Nutzer teilhaben lassen möchte und dass bei entsprechender Aktivierung innerhalb der Clientanwendung bei deren Ausführung durch das Endgerät des mindestens einen Verbreiters unter Verwendung der ersten Funktechnik kurzer Reichweite periodisch eine Nachricht mit einem Profilnamen des mindestens einen Verbreiters und mit Informationen über durch diesen Verbreiter zur Teilhabe freigegebene Internetinhalte ausgesendet wird.

3. Verfahren nach Anspruch 2, wobei das mobile Endgerät des mindestens einen Nutzers Angebotsnachrichten der Endgeräte mehrerer Verbreiter empfängt, **dadurch gekennzeichnet, dass** das diese Angebotsnachrichten empfangende mobile Endgerät an seinem mindestens einen Display eine Liste mit den Profilnamen der die Angebotsnachrichten aussendenden Verbreiter anzeigt, aus welcher sein Nutzer denjenigen Verbreiter auswählt, dessen Angebotsnachricht für ihn an diesem Display zur Auswahl der von diesem Verbreiter zur Teilhabe angebotenen Internetinhalte visualisiert wird.

4. Verfahren nach Anspruch 3, **dadurch gekennzeichnet, dass** die Verbreiter dynamischer Inhalte in der durch das mobile Endgerät des mindestens einen deren Angebotsnachrichten empfangenden Nutzers angezeigten Liste entsprechend einer durch Einrichtungen eines Bereitstellers der durch die Endgeräte der das Verfahren verwendenden Nutzer verarbeiteten Clientanwendung festgelegten Priorisierung gelistet werden.

5. Verfahren nach einem der Ansprüche 1 bis 4, wobei eine Teilhabe an zumindest einem der durch einen Verbreiter dafür durch das Aussenden der Angebotsnachricht angebotenen Internetinhalte seitens eines jeweiligen diese Angebotsnachricht mittels seines mobilen Endgeräts empfangenden Nutzers an das Bestehen eines eigenen Accounts bei der Internetplattform des jeweiligen Inhaltevermittlers gebunden ist, **dadurch gekennzeichnet, dass** durch die von dem mobilen Endgerät des die Angebotsnachricht empfangenden Nutzers ausgeführte Clientanwendung bei der Visualisierung der Angebotsnachricht nur die Internetinhalte zur Auswahl für eine Teilhabe angeboten werden, deren Nutzung ohne einen Account möglich ist oder für die der die Nachricht empfangende Nutzer entsprechend dazu durch die von seinem Endgerät verarbeitete Clientanwendung gesammelter Informationen über einen Account bei der Internetplattform des Inhaltevermittlers verfügt, wobei die von dem mobilen Endgerät des die Angebotsnachricht empfangenden Nutzers verarbeitete Clientanwendung bei der Auswahl eines hinsichtlich seiner Nutzung an einen eigenen Account gebundenen Internetinhalts die zugehörige App oder Browseranwendung auf dem mobilen Endgerät des hierdurch zum Teilhabenden werdenden Nutzers automatisiert unter Verwendung für einen Login bei der Plattform des Inhaltevermittlers erforderlicher Credentials startet.

6. Verfahren nach einem der Ansprüche 1 bis 5, **dadurch gekennzeichnet, dass** die Angebotsnachricht durch das Endgerät des mindestens einen Verbreiters über Bluetooth ausgesendet wird.

7. Verfahren nach einem der Ansprüche 1 bis 5, **dadurch gekennzeichnet, dass** das die Angebotsnachricht durch das Endgerät des mindestens einen Verbreiters über eine WLAN-Verbindung ausgesendet wird.

8. Verfahren nach einem der Ansprüche 1 bis 5, wobei die beim Teilen der dynamischen Internetinhalte von den Endgeräten der sie teilenden Nutzer verarbeitete Clientanwendung durch einen Mobilfunkprovider bereitgestellt wird, **dadurch gekennzeichnet, dass** das die Angebotsnachricht durch das Endgerät des mindestens einen Verbreiters als Broadcast-Nachricht über das Mobilfunknetz des die Clientanwendung bereitstellenden Mobilfunkproviders ausgesendet wird und die Reichweite dieser Broadcast-Nachricht durch Netzwerkeinrichtungen des Mobilfunkproviders auf die Funkzelle begrenzt wird, in welcher sich das die Angebotsnachricht aussendende Endgerät jeweils gerade befindet.

9. System zum Teilen dynamischer Internetinhalte in einer lokalen Umgebung, mit mindestens einer Internetplattform eines derartige Inhalte vermittelnden Inhaltevermittlers sowie mit mindestens zwei von jeweils einem Nutzer verwendeten Endgeräten, welche für einen Datenaustausch im Internet und zur Ausführung das Internet nutzender Apps und Browseranwendungen sowie zur Verwendung einer ersten, nämlich derselben, die lokale Umgebung für das Teilen der Internetinhalte festlegenden Funktechnik kurzer Reichweite ausgebildet sind, **dadurch gekennzeichnet, dass** die mindestens zwei Endgeräte mit einer, nämlich mit derselben durch sie ausführbaren Clientanwendung ausgestattet sind, durch deren Verarbeitung
- mindestens ein Endgerät eines Verbreiters, nämlich das Endgerät mindestens eines Nutzers dazu eingerichtet ist, unter Verwendung der Funktechnik kurzer Reichweite wiederholt automatisiert eine Angebotsnachricht auszusenden, mit welcher der Verbreiter es anderen Nutzern anbietet, mittels ihrer mobilen Endgeräte, an einer durch den Verbreiter mittels seines Endgeräts unter einem Account bei einer Internetplattform eines Inhaltevermittlers erfolgenden Nutzung dynamischer Internetinhalte teilzuhaben;
- das mindestens ein, sich im Empfangsbereich der durch das Endgerät des Verbreiters ausgesendeten Angebotsnachricht befindendes mobiles Endgerät eines anderen Nutzers dazu eingerichtet ist, die Angebotsnachricht zu empfangen, die Angebotsnachricht an seinem mindestens einen Display zu visualisieren und, sofern der Nutzer dieses Endgeräts mindestens einen ihm durch den Verbreiter zur Teilhabe angebotenen Inhalt in der ihm visualisierten Angebotsnachricht des Verbreiters auswählt, automatisiert eine Internetverbindung aufzubauen sowie eine jeweilige, zur Nutzung des ausgewählten Internetinhalts erforderliche App oder Browseranwendung zu starten.
